# EUROPEAN PATENT SPECIFICATION

(11) **EP 1 854 825 B1**
(45) Date of publication and mention of the grant of the patent: **11.11.2009**
(21) Application number: 07108090.7
(22) Date of filing: 11.05.2007
(51) Int. Cl.: C08G 73/00

(54) **A fiber reinforced gas turbine engine component**
Faserverstärktes Bauteil eines Gasturbinenmotors
Composant de moteur de turbine à gaz renforcé avec des fibres

(30) Priority: 12.05.2006 US 383092
(43) Date of publication of application: 14.11.2007
(73) Proprietor: GENERAL ELECTRIC COMPANY, Schenectady, NY 12345 (US)
(72) Inventor: Ronk, Warren R., West Chester, KY 45069 (US); Whiteker, Stephen M., Convington, KY Kentucky 41017 (US)
(74) Representative: Szary, Anne Catherine

(56) References cited:
- EP-A- 0 296 112
- EP-A1- 0 424 956
- DE-A1- 4 123 245
- GB-A- 1 215 481
- US-A- 5 639 850
- US-B1- 6 979 721

## Description

### FIELD OF THE INVENTION

The present invention relates generally to polyimide resins, polyimide prepolymer mixtures, methods for forming polyimide resins, and components formed from polyimide resins.

### BACKGROIJND OF THE INVENTION

Addition-type polyimides, derived from end-capped polyimide oligomers, typically undergo thermal cross-linking or chain extension to form a crosslinked polyimide resin. Addition-type polyimides provide suitable matrix materials for high temperature polymer matrix composites due to their desirable heat resistance, desirable mechanical properties, desirable tribilogical properties, high chemical resistance and high radiation resistance. However, the processibility of given polyimides are limited and the range of properties are limited to the particular type of polyimide fabricated.

High temperature parts, such as gas turbine engine components are typically fabricated by a hand lay-up method. The hand lay-up method typically includes positioning a prepreg. fiber onto a mold and pouring a liquid resin onto the fiber. The curing typically takes place at room temperature and the blend is rolled to work out any air bubbles and to fully distribute the resin. In addition, the manipulation of the resin to remove air bubbles and to distribute the resin may result in damage to the fibers making up the composite. This method suffers from the drawback that the processing method is labor intensive and suffers from high costs. Alternative methods, such as resin film infusion (RFI), are desirable techniques due to the decreased labor costs related to performing RFI and the reproducible parts that may be achieved. The curing typically takes place at elevated temperatures in an autoclave and the cure is done in a vacuum bag under high pressure (typically 100-200 psi) in order to make the resin flow and remove entrapped air and condensable gases. However, conventional polyimide oligomers lack the processibility required for fabrication of parts using RFI. For example, known polyimides typically include a high melting or low molecular weight powder, but lack the flexibility of the combination of melting temperature and molecular weight that is desirable for processing techniques, such as RFI.

Currently, addition polyimides are used either as a monomeric solution (e.g., PMR-15 5 monomeric solutions) which reacts in a 2 step fashion to form a crosslinked system or as preimidized powders which melt prior to crosslinking to again form a crosslinked system. Monomeric solutions of preopolymer polyimides typically include a diamine, a dianhydride and an end blocking agent having a crosslinkable group. PMR-15, for example, is a reaction product of monomethyl ester of 5-norbornene 2,3-dicarboxylic acid, dimethyl ester of 3,3', 4,4'-benzophenone tetracarboxylic acid and 4,4' methylenedianiline (MDA). PMR-1 5 is a material that has found extensive use in gas turbine engine component manufacture. However, the partially unreacted solutions of PMR-15 include MDA, which is a known carcinogen and is a known liver and kidney toxin. Fully reacted under cured PMR-15 compound mixtures no longer contain MDA and are less hazardous to handle. Nonetheless, while the properties of PMR-15 are suitable for use in the fabrication of higher temperature gas turbine engine parts, the use of MDA during the fabrication of the polyimide resin significantly increases costs and processing complexity.

What is needed is a polyimide prepolymer and crosslinked polyimide system that includes properties that may be tailored to particular applications and are fabricated by methods that include less hazardous chemicals. Further, what is needed is a method for fabricating polyimide materials that reduces or eliminates the requirement for hazardous and/or carcinogenic materials.

US 6979721 discloses polyimides having improved thermal oxidative stability derived from the polymerisation of at least one tetracarboxylic dianhydride, at least one polyamine and a dicarboxylic end cap having a specified formula.

US 5639850 discloses a process for preparing a tough, soluble, aromatic, thermoplastic copolyimide comprising the steps of (a) providing 4,4'-oxydiphthalic anhydride to 3,4,3'4'-biphenyltetracarboxylic dianhydride at a mole ratio ranging from about 25 mole percent to 75 mole percent to 75 mole percent to about 25 mole percent; (b) adding 3,4'-oxydianiline to form a mixture; (c) adding a polar aprotic or polar protic solvent to the mixture to form a solution having a percentage of solids capable of maintaining polymer solubility; (d) stirring the solution to allow it to react; (e) adding an azeotropic solvent to the solution and heating to remove water; (f) cooling the solution of step (e) to room temperature and recovering the copolyimide.

DE 4123245 discloses polyimide polymers containing cyclic urea units prepared by reacting aromatic diamine containing cyclic urea groups with aromatic or heteroaromatic tetracarboxylic acid dianhydrides.

EP 0424956 discloses low void composites with high Tg polyimide matrices prepared from stoichiometrically unbalanced precursors.

EP 0296112 discloses storage stable curable polyimide resins suitable as matrix resins for prepregs.

GB 1215481 discloses a process for the production of a soluble fusible pre-polymer which comprises reacting an acidic reactant, which is at least one aromatic tetracarboxylic acid or functionally equivalent derivative thereof, wherein the carbonyl groups of the carboxylic acid groups are arranged in pairs and the members of each pair being attached directly to adjacent nuclear carbon atoms, with an amine reactant which is at least one N,N'diacyl derivative of at least one aromatic diprimary diamine in which the primary amino groups are attached directly to nuclear carbon atoms, in bulk or in a diluent which is a mono carboxylic acid, a mono carboxylic acid anhydride, or a fixture thereof, whereby carboxylic acids or esters are eliminated and soluble fusible pre-polymer is produced.

### SUMMARY OF THE INVENTION

One embodiment of the present invention is a combination of at least one prepolymer powder with a liquid prepolymer compound or compound mixture dissolved in a polar solvent. In addition, the present invention includes at least one prepolymer powder blended with a second prepolymer powder. The present invention also includes combinations of a prepolymer powder blended with one or more polyimide monomer components. These blends form polyimide copolymer systems having properties that may be adjusted by adjusting the particular prepolymer components that are blended and their relative concentration with respect to each other. For example, a prepolymer material with good thermal oxidative stability (TOS) but low glass transition temperature (Tg) may be blended according to the present invention with a high glass transition temperature prepolymer material to form a prepolymer material and a final crosslinked polyimide copolymer material having tailored properties.

The present invention includes a gas turbine engine component comprising a fiber reinforced matrix. The matrix includes a crosslinked matrix including an R₁ group and a an R₂ group, and/or an M group. The R₁ group and R₂ group independently comprise the formula: 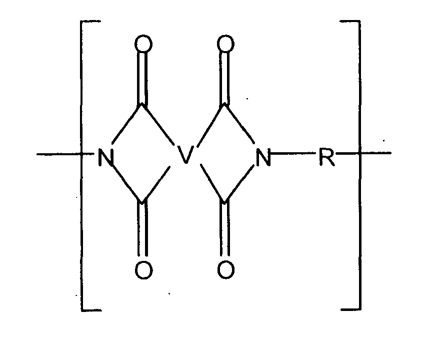 wherein V is a tetravalent substituted or unsubstited aromatic monocyclie or polycyclic linking structure; and R is a substituted or unsubstituted divalent organic radical. The R₂ structure is different from the structure for R₁. The M group, when present, is selected from the group consisting of a diamine structure, a dianhydride structure and an end group structure, with the M group being in the reacted or unreacted form. The crosslinked matrix has a glass transition temperature and a thermal oxidative stability sufficient to provide component stability for operational temperature up to about 550 °F.

The present invention also includes a gas turbine engine component made by method including providing a first prepolymer component having a molecular weight of from about 500-2000 g/mol, a second prepolymer component having a molecular weight from about of 1000-2,500 g/mol, and a fiber. The method further includes mixing the first prepolymer component and the second prepolymer component to form a prepolymer mixture. The mixture is then brought into contact with the fiber and cured to form a crosslinked polyimide copolymer gas turbine engine component having a glass transition temperature of greater than about 450 °F.

An advantage of the present invention is that the use of a prepolymer powder that, when cured, may form a cross-linked polymer with a larger range of properties, provides an ability to form cross-linked polymer materials having properties previously unknown for conventional crosslinked polyimide materials

Another advantage of the present invention is that the process may include less hazardous and/or non-carcinogenic materials to form materials having properties comparable or exceeding the properties of polyimide materials known in the art.

Yet another advantage of the present is that the mixture is capable of forming films which can be used in multiple composite manufacturing processes, wherein known addition polyimide systems typically cannot be used in multiple composite manufacturing processes.

Other features and advantages of the present invention will be apparent from the following more detailed description of the preferred embodiment, taken in conjunction with the accompanying drawings which illustrate, by way of example, the principles of the invention.

### DETAILED DESCRIPTION OF THE INVENTION

The present invention includes prepolymer mixtures for forming polyimide resins. One embodiment of the present invention includes a polyimide prepolymer mixture having a first prepolymer component and a second prepolymer component. The first prepolymer component includes compounds having the following formula (I):

E₁-[R₁]ₙ-E₁ (I)

The second prepolymer component includes compounds having one or more of the following formula (II) and (III):

E₂-[R₂]ₙ-E₂ (II);

or

M₁ (III)

wherein n is from about 1 to about 1000 structural units or more. The repeating structural units may also include from about 10 to about 750 structural units or from about 50 to about 500 structural units. R₁ and R₂ in each formulas (I) or (II) independently include groups having the following formula (IV): 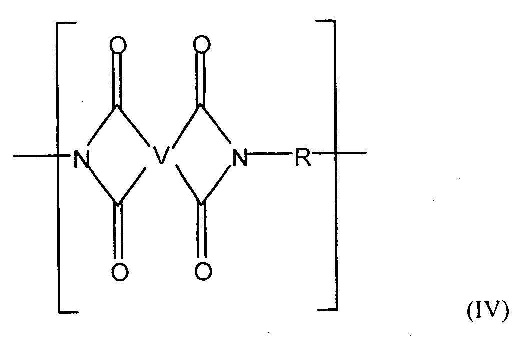 wherein V is a tetravalent substituted or unsubstited aromatic monocyclie or polycyclic linking structure, preferably including from about 5 to about 50 carbon atoms. Substitutions in the linking structures may include, but are not limited to ethers, epoxides, amides, esters and combinations thereof. Preferred linking structures suitable for use as V in formula (IV) include the following formulae: 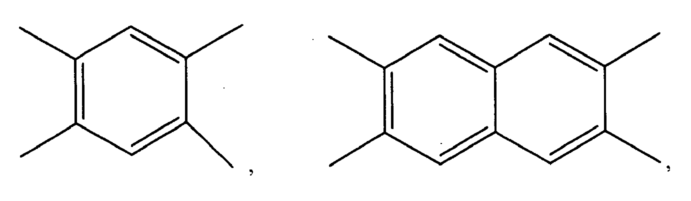 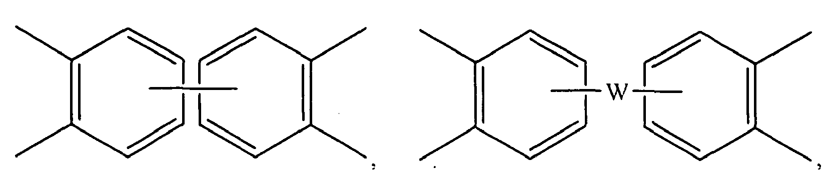 and combinations thereof.
wherein W is a divalent moiety selected from the group consisting of -O-, -S-, - C(O)-, -SO₂-, -SO-, -C_{y}H_{2y}- (y being an integer from 1 to 5), and halogenated derivatives therof. In addition, W may include a moiety selected from the group consisting of -O-, -O-Z-O-, wherein the divalent bond of the -O-, and of -O-Z-O-group are in the 3, 3', 3,4', 4,3' or the 4,4' positions. Z includes, but is not limited to aromatic divalent radicals having the following formulae: 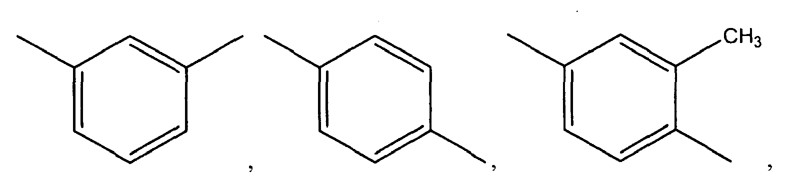 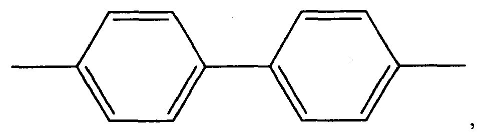 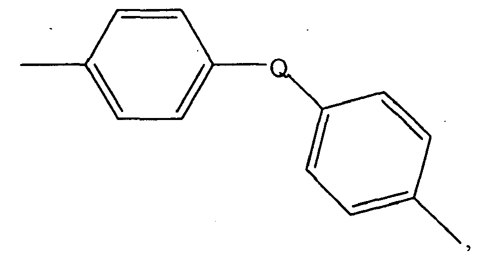 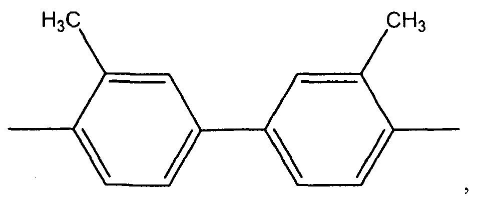 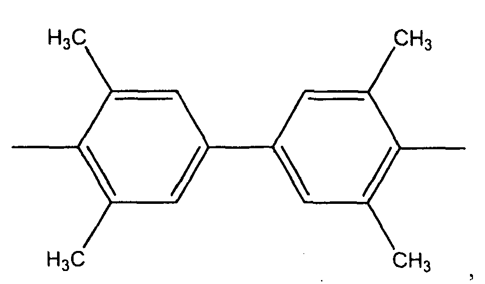 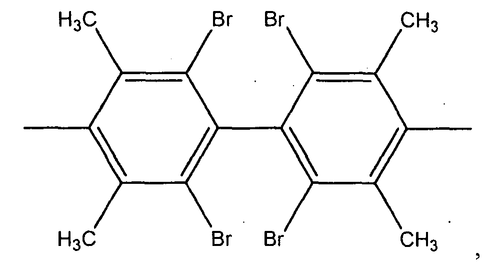 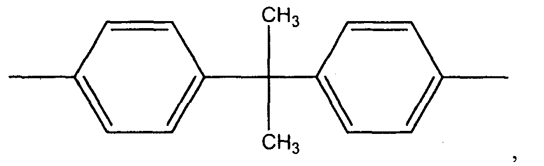 and 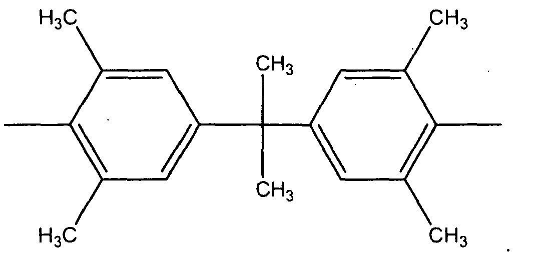 R, shown in the above formula (IV) includes, but is not limited to substituted or unsubstituted divalent organic radicals such as aromatic hydrocarbon radicals having about 6 to about 20 carbon atoms and halogenated derivatives thereof, straight or branched chain alkylene radicals having about 2 to about 20 carbon atoms, cycloalkylene radicals having about 3 to about 20 carbon atoms or divalent radicals having the following formula: 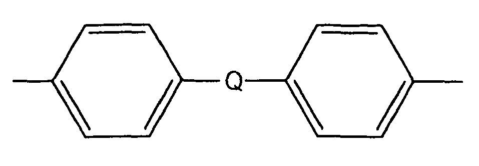 wherein Q in the above formulas includes, but is not limited to divalent moieties selected from -O-, -S-, -C(O)-, -SO₂-, -SO-, -C_{y}H_{2y}- (y being an integer from 1 to 5), and halogenated derivatives thereof.

End groups E₁ and E₂ in each of the first and second prepolymer components, independently, include groups that are capable of forming oligomer compounds with R₁ and/or R₂, as defined above and capable of crosslinking in an addition polymerization reaction to form a crosslinked polyimide structure. End group structures according to the present invention may include, but are not limited to at least one the following end group containing structures:
nadic end groups, including, but not limited to the following formula: 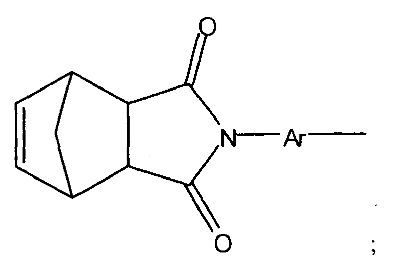
vinyl end groups including, but not limited to the following formula: 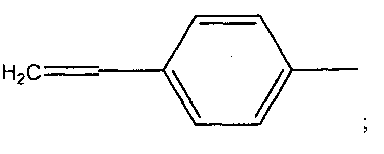
acetylene end groups including, but not limited to the following formula: 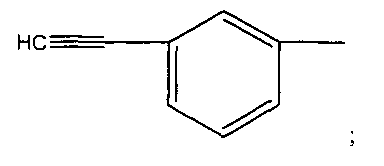
phenylenthynyl end groups including, but not limited to the following formula: 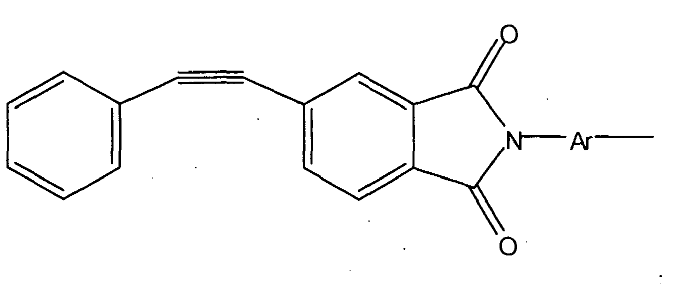
and mixtures thereof.

Ar as shown above in the nadic and phenylenthynyl end group structures may include aromatic groups, such as substituted or unsubstituted aromatic monocyclic or polycyclic linking structures. Substitutions in the linking structures may include, but are not limited to ethers, epoxides, amides, esters and combinations thereof.

A preferred oligomer structure for use as the first and/or second prepolymer components includes the formula (V) as R₁ and/or R₂ 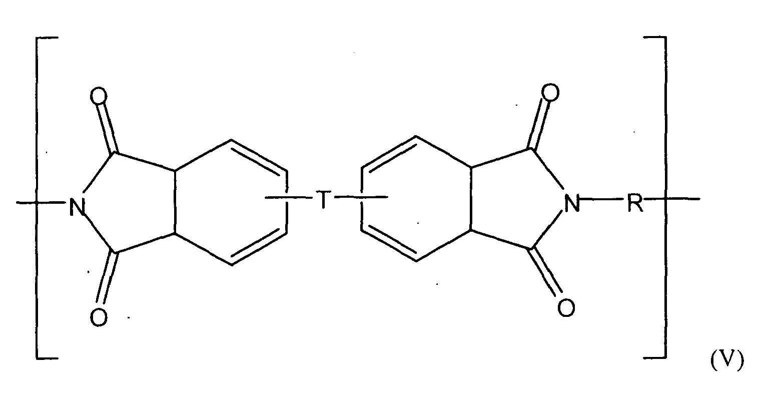 wherein T may include, but is not limited to ethers, epoxides, amides, ketones, esters and combinations thereof. A more preferred structure for the first and/or second prepolymer components having structure (V) include the formula wherein T is a - C(O)- group and R has the following formula: 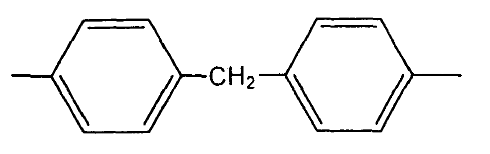 and wherein E₁ and E₂ each have the following formula:

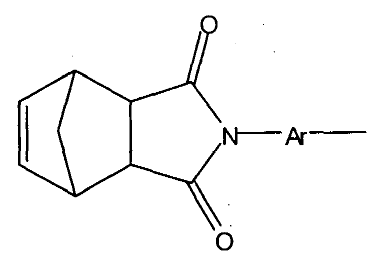

While the second prepolymer component may be an oligomer structure, as discussed above, the second prepolymer component may also include a mixture of monomer components, as shown above in formula (III) includes a monomer mixture. The M1 monomer mixture includes components capable of forming polyimide prepolymers having an end-capped oligomer structure and/or a crosslinked polyimide polymer or copolymer. M1 preferably includes a diamine, a dianhydride and an end blocking agent having a crosslinkable group.

The diamine component of the M1 may include, but is not limited to, an aromatic diamine monomer having the following formula (VI):

H₂N-Ar-NH₂ (VI)

(VI)

Ar as used in the formula (VI) preferably includes aromatic compounds, including substituted aromatic compounds and compounds having multiple aromatic rings. Substituent groups for substitution in the Ar group may include any suitable functional group, including, but not limited to halogen groups, alkyl groups, alkoxy groups, and combination thereof.

Examples of suitable diamine component may include, but is not limited to: p-phenylenediamine, ethylenediamine, propylenediamine, trimethylenediamine, diethylenetriamine, triethylenetetramine, hexamethylenediamine, heptamethylenediamine, octamethylenediamine, nonamethylenediamine, decamethylenediamine, 1,12-dodecanediamine, 1,18-octadecanediamine, 3-methylheptamethylenediamine, 4,4-dimethylheptamethylenediamine, 4-methylnonamethylenediamine, 5-methylnonamethylenediamine, 2,5-dimethylhexamethylenediamine, 2,5-dimethylheptamethylenediamine, 2,2-dimethylpropylenediamine, N-methyl-bis (3-aminopropyl) amine, 3-methoxyhexamethylenediamine, 1,2-bis(3-aminopropoxy) ethane, bis(3-aminopropyl) sulfide, 1,4-cyclohexanediamine, bis-(4-aminocyclohexyl) methane, m-phenylenediamine, p-phenylenediamine, 2,4-diaminotoluene, 2,6-diaminotoluene, m-xylylenediamine, p-xylylenediamine, 2-methyl-4,6-diethyl-1,3-phenylene-diamine, 5-methyl-4,6-diethyl-1,3-phenylenc-diamine, benzidine, 3,3"-dimethylbenzidine, 3,3"dimethoxybenzidine, 1,5-diaminonaphthalene, bis(4-aminophenyl) methane, bis(2-chloro-4-amino-3,5-diethylphenyl) methane, bis(4-aminophenyl) propane, 2,4-bis(b-amino-t-butyl) toluene, bis(p-b-amino-t-butylphenyl) ether, bis(p-b-methyl-o-aminophenyl) benzene, bis(p-b-methyl-o-aminopentyl) benzene, 1,3-diamino-4-isopropylbenzene, bis(4-aminophenyl) sulfide, bis (4-aminophenyl) sulfone, bis(4-aminophenyl) ether, 1,3-bis(3-aminopropyl) tetramethyldisiloxane and mixtures comprising at least one of the foregoing organic diamines. Preferred organic diamines include meta-phenylene diamine and para-phenylene diamine.

Further, these diamines are also usable in place of some or all of the hydrogen atoms on one or more of the aromatic ring(s) of each of the diamines. A like number of ethynyl groups, benzocyclobuten-4'-yl groups, vinyl groups, allyl groups, cyano groups, isocyanate groups, nitrilo groups and/or isopropenyl groups, which can act as crosslinking points, may also be introduced as substituent groups on the aromatic rings, preferably to an extent not impairing the moldability or formability.

The dianhydride component of the polyimide monomer includes may include, but is not limited to, monomers having an anhydride structure, wherein a preferable structure includes a tetracarboxylic acid dianhydride structure. The dianhydride component employed may be any suitable dianhydride for forming crosslinkable or crosslinked polyimide prepolymer, polymer or copolymer. For example, tetracarboxylic acid dianhydrides, singly or in combination, may be utilized, as desired.

Illustrative examples of aromatic dianhydrides suitable for use in M1 of the second prepolymer component include: 2,2-bis(4-(3,4-dicarboxyphenoxy)phenyl)propane dianhydride; 4,4'-bis(3,4-dicarboxyphenoxy) diphenyl ether dianhydride; 4,4'-bis(3,4-dicarboxyphenoxy)diphenyl sulfide dianhydride; 4,4'-bis(3,4-dicarboxyphenoxy)benzophenone dianhydride; 4,4'-bis(3,4-dicarboxyphenoxy)diphenyl sulfone dianhydride; 2,2-bis(4-(2,3-dicarboxyphenoxy) phenyl)propane dianhydride; 4,4'-bis(2,3-dicarboxyphenoxy)diphenyl ether dianhydride; 4,4'-bis(2,3-dicarboxyphenoxy)diphenyl sulfide dianhydride; 4,4'-bis (2,3-dicarboxyphenoxy)benzophenone dianhydride; 4,4'-bis(2,3-dicarboxyphenoxy) diphenyl sulfone dianhydride; 4-(2,3-dicarboxyphenoxy)-4'-(3,4-dicarboxyphenoxy) diphenyl-2,2-propane dianhydride; 4-(2,3-dicarboxyphenoxy)-4'-(3,4-dicarboxyphenoxy)diphenyl ether dianhydride; 4-(2,3-dicarboxyphenoxy)-4'-(3,4-dicarboxyphenoxy)diphenyl sulfide dianhydride; 4-(2,3-dicarboxyphenoxy)-4'-(3,4-dicarboxyphenoxy)benzophenone dianhydride and 4-(2,3-dicarboxyphenoxy)-4'-(3,4-dicarboxyphenoxy)diphenyl sulfone dianhydride, 1,2,4,5-benzenetatracarboxylic dianhydride as well as mixtures comprising one of the foregoing dianhydrides.

Preferred anhydride components include the following dianhydride compounds:
3,4,3',4'-biphenyltetracarboxylic dianhydrides having the following formula: 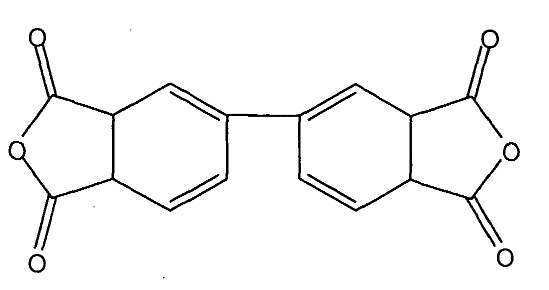
3,4,3',4'-benzophenonetetracarboxylic dianhydrides having the following formula: 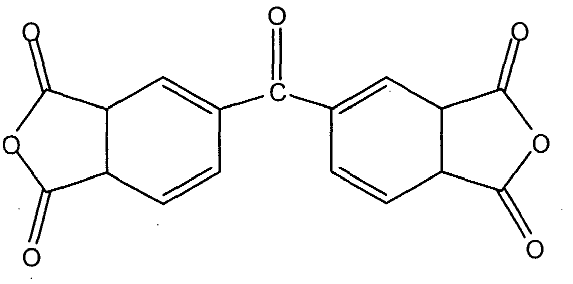
2,2-bis(3',4'-dicarboxyphenyl) hexafluoropropane dianhydrides having the following formula: 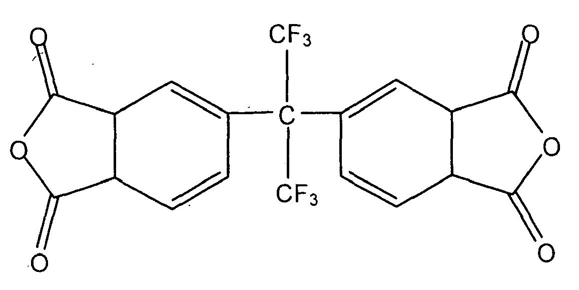
pyromellitic dianhydrides having the following formula: 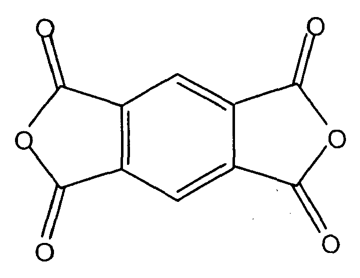 and mixtures thereof.

A preferred dianhydride component includes dimethyl ester of 3,3',4,4'-benzophenone tetracarboxylic acid.

Depending on the fabrication process, tetracarboxylic acid monoanhydrides, tetracarboxylic compounds other than anhydrides, or their derivatives such as salts may also be used as desired instead of the above recited dianhydrides. The dianhydride components of the present invention, as described above, may be used either singly or in combination as needed.

The aromatic dianhydrides can be prepared by any suitable fabricating method known in the art. One suitable fabrication method for fabricating aromatic dianhydrides may include hydrolysis, followed by dehydration, of the reaction product of a nitro substituted phenyl dinitrile with a metal salt of dihydric phenol compound in the presence of a dipolar, aprotic solvent.

End-group compounds of the M1 group may include structures that are capable of forming oligomer compounds with the R₁ and/or R₂, as defined above and capable of crosslinking in an addition polymerization reaction to form a crosslinked polyimide structure. Crosslinkable-group-containing end blocking agents of various kinds are usable depending on the synthesis process of the polyimide, including monoamines and dicarboxylic acid anhydrides as representative examples. As crosslinkable groups to be introduced, a variety of known crosslinkable groups may be selected in accordance with molding or forming conditions.

The crosslinkable group structures contained in the end groups may includes ethynyl groups, bcnzocyclobuten-4'-yl groups, vinyl groups, allyl groups, cyano groups, isocyanate groups, nitrilo groups, amino groups, isopropenyl groups, vinylene groups, vinylidene groups, and ethynylidene groups.

The above-described, crosslinkable-group-containing end blocking agents can be used either singly or in combination. Some or all of the hydrogen atoms on one or more of the aromatic rings of the end group containing material may be replaced by a like number of substituent groups selected from halogen groups, alkyl groups, alkoxy groups, and combinations thereof.

Preferred end group structures according to the present invention may include, but are not limited to, at least one the following end group containing structures:
monomethyl ester of 5-bornene-2,3-dicarboxylic acids, including, but not limited to, the following formula: 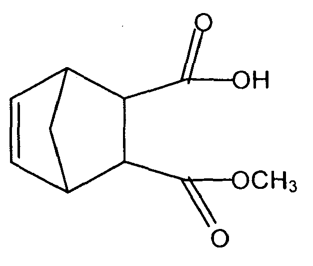 and
   4-phenylehtynylphthalic anhydrides including, but not limited to the following formula:

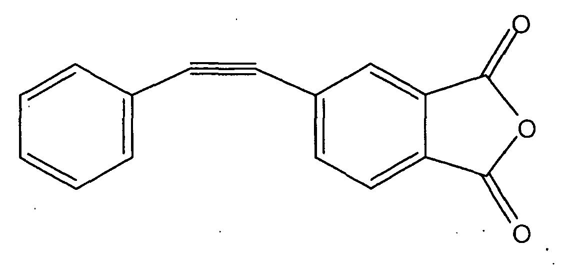

The present invention further includes the process of making polyimide resins from prepolymer components. The process for making a crosslinkable copolymer polyimide resin includes blending a first prepolymer component having the following formula:

E₁-[R₁]ₙ-E₁ (I);

and
a second prepolymer component having the following Formula (I) and/or (II):

E₂-[R₂]ₙ-E₂ (II),

or

M₁ (III);

wherein n, R₁, R₂, E₁, E₂ and M₁ are as defined above. Sufficient amounts of the first prepolymer component, the second prepolymer component and sufficient blending are provided to form a prepolymer solution or dispersion wherein the melt viscosity of and glass transition temperature of the solution or dispersion is greater than about 450° F or the melt viscosity of the solution or dispersion of 1000 centipoise or greater. The first prepolymer component may be a solid or a liquid. Likewise, the second prepolymer component may be a solid or a liquid. For example, the first prepolymer mixture may be a powdered solid which is blended with a liquid second prepolymer solution. In another embodiment, a powder first prepolymer component may be blended with a powder second prepolymer component. Any combination of liquids and solid prepolymer components may be used.

The process for making a crosslinked polyimide copolymer according to another embodiment of the present invention includes providing a prepolymer blend, including a first prepolymer component and a second prepolymer component, and a fiber. The prepolymer blend is brought into contact with the fiber and the combination of the fiber and the prepolymer blend is cured. Curing takes place using any suitable technique known in the art to initiate crosslinking of the prepolymer components. In one embodiment, the curing takes place at a temperature and pressure sufficient to provide a crosslinked polyimide copolymer having a low void content and a glass transition temperature of greater than about 450 °F.

The present invention further includes a polyimide resin product formed from prepolymer components. This embodiment of the invention includes a crosslinked polyimide copolymer formed from the method making a crosslinkable copolymer polyimide resin including blending a first prepolymer component having the following formula (I):

E₁-[R₁]ₙ-E₁ (I);

and
a second prepolymer component having the following formula (II and/or III):

E₂-[R₂]ₙ-E₂ (II),

or

M₁ (III);

wherein n, R₁, R₂, E₁, E₂ and M1 are as defined above. Sufficient amounts of the first prepolymer component, the second prepolymer component and sufficient blending are provided to form a prepolymer solution or dispersion wherein the melt viscosity of and glass transition temperature of the solution or dispersion is greater than about 450° F or the melt viscosity of the solution or dispersion is preferably as low as 1000 centipoise. The prepolymer solution or dispersion is then cured at a temperature and pressure sufficient to provide a crosslinked polyimide copolymer having a low void content and a glass transition temperature of greater than about 450 °F.

The invention further includes the crosslinked polyimide product. The polyimide resin product formed from the prepolymer components further includes a crosslinked polyimide copolymer having a crosslinked matrix including an R₁ group and a group selected from an R₂ group, an M group and combinations thereof. The R₁ group and the R₂ group contained within the crosslinked matrix independently have the following formula (VII):wherein V and R are as defined above. The M group in the crosslinked matrix includes one or more of a diamine structure, a dianhydride structure and/or a end group structures in the reacted or unreacted form.

M group may include a mixture of compounds selected from the group consisting of R is a substituted or unsubstituted divalent organic radical, aromatic tetracarboxylic dianhydride structure, and functional groups capable of forming oligomer compounds with the R₁ or R₂ structures, wherein the functional groups are crosslinked within the crosslinked polyimide copolymer, and combinations thereof.

In one embodiment of the invention, in order to form the prepolymer compounds, a monomeric solution mixture is provided and a first prepolymer compound is added in solid form. The monomer solution includes a diamine, a dianhyride and an endgroup monomeric compound. Particularly suitable solid forms include, but are not limited to, powders which are easily dispersed and/or dissolved in the monomeric solution.

The above components, including the first prepolymer component and the second prepolymer component, may be fabricated using any known methods. Suitable methods for forming the first prepolymer components include reacting substantially equimolar amounts of dianhydride and diamine and a termination agent in a high boiling aprotic solvent under imidification conditions to form an insoluble prepolymer. The present invention is not limited to an aprotic solvent and may include any solvent composition suitable for reacting the monomer components (i.e., the dianhydride, the diamine and the termination agent).

Another embodiment of the present invention includes providing a first prepolymer component and a second prepolymer component in a predetermined ratio and blending the components together in a ratio suitable to provide desired properties in the prepolymer mixture and in the cured polyimide product. Properties that may be varied with the ratio of the blending include, but are not limited to thermal oxidative stability, molecular weight, glass transition temperature, and melt viscosity of the prepolymer mixture.

Molecular weight (MW) for the prepolymer components is utilized in providing a prepolymer mixture and a crosslinked polyimide material having the desired properties. In one embodiment of the present invention powder resin having a MW of about 700-2500 g/mol is provided as a prepolymer component. The final blends ratio in this embodiment of the invention is 10-60% by weight based on imidized solids of resin blend. In another embodiment of the invention, liquid resin having a MW of about 1,000-2,500 g/mol is provided as a prepolymer component. The liquid composition includes 20-60% imidized solids as a solution in either ethanol or methanol comprising ethyl ester or methyl esters of the prepolymer components. In either the powder or liquid mixtures, the MW of the individual components may be individually selected to provide desired properties, such as MW, glass transition temperature and/or thermal oxidative stablility in the prepolymer mixture and in the cross-linked polyimide resin. In another embodiment of the invention, a powder prepolymer component is mixed with a liquid prepolymer component. One mixture includes a larger difference in MW between prepolymer components, a lower MW powder mixed with a higher molecular weight liquid. Specifically, a powder prepolymer component having a MW of 800 g/mol is mixed with a liquid prepolymer component having a MW of 2,100 g/mol, constituting a 20 wt% powder prepolymer to 80 wt% liquid prepolymer. Another mixture includes a smaller difference in MW between prepolymer components. Specifically, a powder prepolymer component having a MW of 990 g/mol is mixed with a liquid prepolymer component having a MW of 1,600 g/mol, constituting a 30 wt% powder prepolymer to 70 wt% liquid prepolymer.

Glass transition temperature (Tg) is a measure of the ability of the polymer to maintain properties at elevated temperature. Because bulk motion of the polymer is restricted below the Tg, the higher the Tg a material displays, typically, the higher the temperature capability of that material. This is, however, a measure of the temperature capabilities of the material over only short times at high temperature.

Melt viscosity is a measure of a fluids resistance to flow at temperatures above the melt point. For processing composites, it is geneally disrable to have melt viscosities below 100,000 centipoise (cps) with the preferred range of 40,000cps- 800cps wherein the melt viscosity is dependent upon the processing utilized. If the melt viscosity is not sufficiently low, processing requires excessive pressures in order to make the resin flow. Lower melt viscosities generally lead to greater processing options due to decreased pressure needs.

Thermal Oxidative Stability (TOS) is the ability of the polymer to withstand elevated temperatures in an oxygen containing environment, such as air, with minimal loss of weight and/or properties. Turbine engine components often operate in high prepessure as well as high temperature environments and the high pressure acts to increase the concentration of oxygen accelerating the deterioration of composite properties. Since, in a composite, compression strength is a resin dominated property, the retention of compression strength after long-time exposures to high temperatures is monitored as a measure of TOS. Weight loss over time is also used a measure. Polymers degrade through mechanisms, such as volatilization, resulting in a composite having reduced mass due to this loss of polymer. A test used by the inventors of this application to measure TOS includes placing a plaque of polymeric or composite material in a chamber, increasing the temperature and pressure, within the chamber to a predetermined temperature and pressure and holding these conditions for up to 150 hours with multiple atmosphere changes over the course of the test. The plaques are then removed and tested for weight loss and retention of compression strength. The weight loss and retention of compression strength reflect service conditions in a turbine engine and provide a measure of the longer-term stability of the polymer material. A higher TOS is important for material that will be placed in a high temperature environment for long periods of time. The crosslinked polyimide copolymer of the present invention preferable has a TOS of less than about 2.0%.

Nadic end-capped prepolymer components, as represented by PMR-15 and RP-46, not only undergo reactions to form a low-molecular-weight oligomer typical of condensation polyimides, but also undergo an addition-type irreversible Diels-Alder reaction leading to a high-molecular weight cross-linked polyimide.

One embodiment of the invention includes utilizing the prepolymer blends in a resin film infusion (RFI) process. In RFI, a fiber containing preform is typically placed on a mold or other surface capable of providing the cured material with the desired geometry. A preferred fiber, particularly for aerospace applications, is carbon fiber. The fiber reinforcement of the preform is not limited to carbon fiber and may include any suitable fiber having high strength, sufficient stiffness, and relatively low density. The fiber for impregnation may be a fiber in any suitable form including, but not limited to uniaxial, braided, multi-layered, or woven forms. In addition, the fibers may be continuous fibers, chopped fiber, braided fiber, fiber fabric, woven fibers and noncrimp fabric, unitape fiber, fiber film or any suitable form of fiber that results in a reinforced composite material when cured. In addition, multiple types of fibers may be utilized in the preform.

The polyimide prepolymer matrix material may be placed as a film layer or layers on or within intermediate layers of the reinforcing fiber preforms to cover all or a majority of the preform. Alternatively, the film material, including the prepolymer blend, may be provided as at least a portion of the preform, wherein the material provided includes fibers onto which the resin blend has been placed into contact. The prepolymer blend resin material may be applied onto the entire surface of the reinforcing fiber preform. Alternatively, the matrix material may be interleaved between layers of the preform to cover all the layers of reinforcing fiber preform. Sufficient prepolymer material is provided to impregnate the preform during a heated resin infusion phase. Typically, the RFI method will include placing a barrier coating, such as a polytetrafluoroethylene barrier onto the prepolymer blend and/or prepreg material to assist in controlling the flow of resin. The preform and prepolymer blend may then be placed into a vacuum membrane or similar vacuum providing apparatus. The mold, fiber, resin, barrier coating and vacuum membrane may be placed into an autoclave or other controlled atmosphere device. The precise processing parameters utilized vary and depend upon the particular materials used as the first and second prepolymer components in the prepolymer blend.

In one embodiment, the temperature and pressure are increased within the autoclave, while simultaneously drawing a vacuum on the vacuum membrane. The increased temperature and vacuum facilitate the infiltration of the resin into the perform. The temperature and vacuum are maintained until the resin has sufficiently impregnated the preform to avoid the formation of voids. After infiltration, the temperature may be increased to begin crosslinking of the prepolymer blend. The specific parameters of the cure cycle vary and depend upon the particular materials used as the first and second prepolymer components in the prepolymer blend.

In an alternate embodiment, the polyimide prepolymer mixture may be processed using resin transfer molding (RTM). The materials utilized for the fiber reinforcement and the matrix are substantially the same as those used in the discussion of the RFI process above. However, in RTM, an injection system is utilized to inject the prepolymer mixture into a mold by pressurization of the prepolymer mixture. The mold, which has the substantial geometry of the finished component, includes the fiber preform. The pressurized prepolymer mixture impregnates the dry fibers of the fiber preform and is cured to crosslink the prepolymer mixture and form the final component. The specific parameters of the cure cycle vary and depend upon the particular materials used as the first and second prepolymer components in the prepolymer blend.

The polyimide copolymer prepolymer mixture of the first and second prepolymer components of the present invention may be provided in any suitable form prior to curing. Forms that are particularly suitable include prepreg fiber materials, nanofiber filled tailorable polyimide resins, powder coated tow/preform infused with liquid. One embodiment of the present invention includes a first prepolymer component in a powder form, which is blended with the liquid second prepolymer component.

### EXAMPLE

A prepolymer mixture was formed from a blend of dimethyl ester of 3,3', 4,4'-benzophenone tetracarboxylic dianhydride ("BTDA"), (4,4'-[1,3-phenylene bis (1-methyl-ethylidene)] bisaniline) ("Bis Aniline M"), paraphenylene diamine ("para PDA"), norbornene 2,3-dicarboxylic acid ("NE") and 3,3',4,4'-biphenyltetracarboxylic dianhydride (BPDA). In another embodiment of the invention, the above mixture was further mixed with a solid powder second prepolymer component having a reaction product of NE, BTDA, metaphenylene diamine (meta PDA), and Bis-Aniline M.

The liquid prepolymer component included the following molar compositional concentrations of monomers:
30 mol% Bis Aniline M,
12.9 mol% p PDA,
28.6 mol% NE and
varying mol% of BPDA and BTDA, as shown in TABLE 1, wherein the total mol% of the combination of BPDA and BTDA is 28.5 mol%.

**TABLE 1**

| MOLAR COMPOSITIONS OF EXAMPLES 1-12 | | | | | |
|---|---|---|---|---|---|
| Example | BTDA | BPDA | Bis Aniline M | p PDA | NE |
| 1 | 24.2% | 4.3% | 30.0% | 12.9% | 28.6% |
| 2 | 24.2% | 4.3% | 30.0% | 12.9% | 28.6% |
| 3 | 24.2% | 4.3% | 30.0% | 12.9% | 28.6% |
| 4 | 21.4% | 7.1% | 30.0% | 12.9% | 28.6% |
| 5 | 21.4% | 7.1% | 30.0% | 12.9% | 28.6% |
| 6 | 21.4% | 7.1% | 30.0% | 12.9% | 28.6% |
| 7 | 24.2% | 4.3% | 30.0% | 12.9% | 28.6% |
| 8 | 24.2% | 4.3% | 30.0% | 12.9% | 28.6% |
| 9 | 24.2% | 4.3% | 30.0% | 12.9% | 28.6% |
| 10 | 21.4% | 7.1% | 30.0% | 12.9% | 28.6% |
| 11 | 21.4% | 7.1% | 30.0% | 12.9% | 28.6% |
| 12 | 21.4% | 7.1% | 30.0% | 12.9% | 28.6% |

A solid powder prepolymer component was added to the liquid monomer mixture in Examples 1-12. The solid powder prepolymer component included a reaction product of the following components:
40mol% NE,
20 mol% BTDA,
28 mol% metaphenylene diamine (meta PDA), and
12 mol% bis-aniline M.

The reaction product forming the solid powder prepolymer component was a polyimide oligomer known in the art and is commercially available as a powder. One commercially available prepolymer corresponding to the above polyimide oligomer is MM 9.36 available from Maverick Corporation, Blue Ash, Ohio.

As shown in Table 2, the solid powder prepolymer was blended with the liquid monomer prepolymer to form a mixture that has the Molecular Weight ("MW") and the structural unit size ("n") shown in the Examples. Examples 1-6 included a MW of 2100 g/mol and a structural unit size of 3. Examples 7-12 included a MW of 1600 g/mol and a structural unit size of 2. The ratio between BTDA and BPDA is varied as shown in Table 1 and the amount of powder added was varied, as shown in TABLE 2.

**TABLE 2**

| TAILORABLE POLYIMIDE RESINS NADIC END CAP | | | | |
|---|---|---|---|---|
| Example | Liquid Formulated MW (g/mol) | n= | Monomer Substitution in Liquid Prepolymer Component** | Powder Prepolymer Component |
| 1 | 2100 | 3 | 15% | 0% |
| 2 | 2100 | 3 | 15% | 15% |
| 3 | 2100 | 3 | 15% | 30% |
| 4 | 2100 | 3 | 25% | 0% |
| 5 | 2100 | 3 | 25% | 15% |
| 6 | 2100 | 3 | 25% | 30% |
| 7 | 1600 | 2 | 15% | 0% |
| 8 | 1600 | 2 | 15% | 15% |
| 9 | 1600 | 2 | 15% | 30% |
| 10 | 1600 | 2 | 25% | 0% |
| 11 | 1600 | 2 | 25% | 15% |
| 12 | 1600 | 2 | 25% | 30% |

| | | | | |
|---|---|---|---|---|
| ** percent of BTDA substituted byBPDA in liquid Resin MM 9.36 powder resin formulated MW = 936 | | | | |

The mixture is cured at a temperature of about 600 °F and a pressure of 200 psi for 4 hours. The glass transition temperature ("Tg") for the cured Examples are shown in TABLE 3. The cured samples was then subjected to a one of 2 post cures. The first post cure includes exposing the sample to a temperature of about 600 °F at ambient pressure for 12 hours. The Tg values for the first post cured Examples are shown in TABLE 3. The second post cure includes exposing the sample to a temperature of about 625 °F at ambient pressure for 12 hrs. The Tg values for the second post cured Examples are shown in TABLE 3.

**TABLE 3**

| GLASS TRANSITION TEMPERATURE | | | |
|---|---|---|---|
| Example | As Cured Tg (°F) | Post Cure 1 Tg (°F) | Post Cure 2 Tg (°F) |
| 1 | 478 | 530 | 551 |
| 2 | 501 | 551 | 589 |
| 3 | 530 | 576 | 595 |
| 4 | 488 | 531 | 553 |
| 5 | 500 | 556 | 583 |
| 6 | 532 | 579 | 606 |
| 7 | 514 | 552 | 563 |
| 8 | 520 | 561 | 590 |
| 9 | 545 | 580 | 606 |
| 10 | 501 | 552 | 578 |
| 11 | 516 | 572 | 590 |
| 12 | 532 | 584 | 609 |

In addition to the post curing the samples were also measured for thermal oxidative stability (TOS). The TOS for Examples 1-12 is shown in TABLE 4. Likewise, the compression strength of the samples was measured for the after subjecting the samples to after thermal cycling from room temperature to 550 °F for 380 cycles. The compression data is shown in TABLE 4.

**TABLE 4**

| | THERMAL OXIDATIVE STABILITY | COMPRESSION STRENGTH |
|---|---|---|
| Example | TOS Weight Loss (%) | Compression (ksi) |
| 1 | 4.83 | 56.95 |
| 2 | 1.42 | 89.75 |
| 3 | 1.62 | 78.94 |
| 4 | 2.23 | 78.87 |
| 5 | 1.39 | 85.16 |
| 6 | 1.84 | 75.67 |
| 7 | 2.8 | 90.57 |
| 8 | 1.54 | 94.09 |
| 9 | 1.91 | 92.9 |
| 10 | 1.25 | 97.76 |
| 11 | 1.44 | 98.19 |
| 12 | 1.67 | 91.61 |

As shown in Examples 1, 4, 7 and 10, a lower Tg and a higher TOS weight loss result from the presence of the liquid monomer mixture alone. The mixture of the liquid prepolymer component with the solid prepolymer component resulted in a Tg of greater than about 500 °F in the cured state and a thermal oxidative stability having a TOS weight loss of less than 2.0%. In the post cured state, the Tg of Examples reached 600 °F or greater.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A gas turbine engine component comprising:
a fiber reinforced matrix, the matrix being a crosslinked matrix comprising an R₁ group and a group selected from an R₂ group, an M group and combinations thereof;
wherein the R₁ group comprises the following structure: 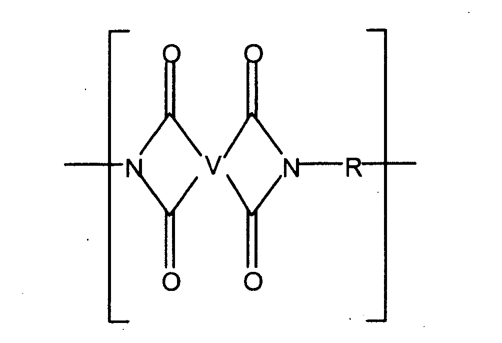 wherein the R₂ group comprises the following structure: 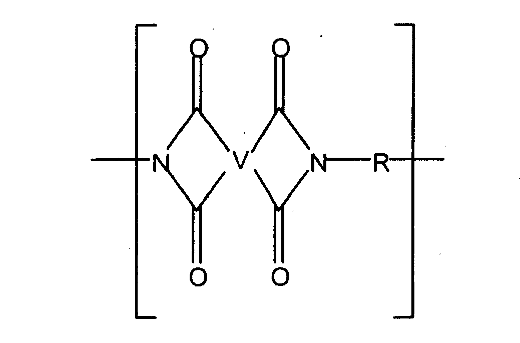 wherein V is a tetravalent substituted or unsubstited aromatic monocyclic or polycyclic linking structure; R is a substituted or unsubstituted divalent organic radical;
the R₂ structure being different from the structure for R₁;
wherein the M group is selected from the group consisting of a diamine structure, a dianhydride structure and an end group structure; and
the crosslinked matrix having a glass transition temperature and a thermal oxidative stability sufficient to provide component stability for operational temperature up to about 288°C (550 °F) wherein the glass transition temperature of the crosslinked polyimide copolymer is from about 232°C (450 °F) to about 343°C (650 °F) and the thermal oxidative stability of the crosslinked polyimide copolymer is less than about 2.0%.

2. The gas turbine engine component of claim 1, wherein R is selected from the group consisting of a substituted or unsubstituted divalent organic radical, an aromatic tetracarboxylic dianhydride structure, a functional group capable of forming oligomer compounds with the R₁ or R₂ structures crosslinked within the crosslinked polyimide copolymer, and combinations thereof.

3. The gas turbine engine component of claim 1, wherein M comprises a diamine group, a dianhydride group and an end group structure.

4. The gas turbine engine component of claim 1, wherein the thermal oxidative stability of the crosslinked polyimide copolymer is about 1.8%

5. The gas turbine engine component of claim 1, wherein the glass transition temperature of the crosslinked polyimide copolymer is greater than 316°C (600 °F).

6. The gas turbine engine component of claim 5, wherein the glass transition temperature of the crosslinked polyimide copolymer is about 338°C (640 °F).

7. The gas turbine engine component of claim 1, wherein the component is has an annular geometry.

8. The gas turbine engine component of claim 1, wherein the component is a bypass-duct.

## Patentansprüche

1. Bauteil einer Gasturbine, aufweisend:
eine faserverstärkte Matrix, wobei die Matrix eine vernetzte Matrix ist, die eine R₁-Gruppe und eine Gruppe aufweist, die aus einer R₂-Gruppe, einer M-Gruppe und Kombinationen davon ausgewählt ist;
wobei die R₁-Gruppe die nachstehende Struktur aufweist: 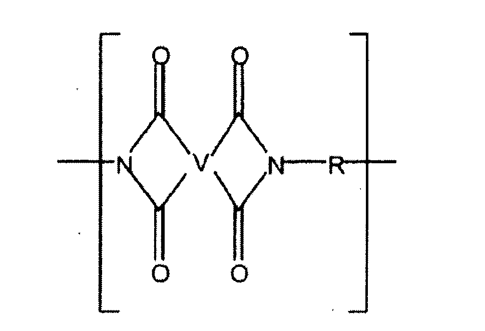 wobei die R₂-Gruppe die nachstehende Struktur aufweist: 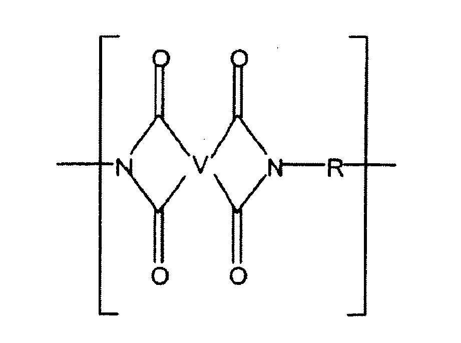 wobei V eine tetravalente substituierte oder unsubstituierte aromatische monozyklische oder polyzyklische Vernetzungsstruktur ist; R ein substituiertes oder unsubstituiertes divalentes organisches Radikal ist;
wobei sich die R₂-Struktur von der Struktur für R₁ unterscheidet;
wobei die M-Gruppe aus der aus einer Diaminstruktur, einer Dianhydridstruktur und einer Endgruppenstruktur bestehenden Gruppe ausgewählt ist; und
die vernetzte Matrix eine Glasübergangstemperatur und eine thermische Oxidationsstabilität besitzt, die ausreicht, um eine Bauteilstabilität für eine Betriebstemperatur bis zu 288 °C (550 °F) bereitzustellen, wobei die Glasübergangstemperatur des vernetzten Polyimid-Copolymers zwischen etwa 232 °C (450 °F) bis etwa 343 °C (650 °F) liegt und die thermische Oxidationsstabilität des vernetzten Polyimid-Copolymers niedriger als etwa 2,0 % ist.

2. Bauteil einer Gasturbine nach Anspruch 1, wobei R aus der Gruppe ausgewählt ist, die aus einem substituierten oder unsubstituierten divalenten organischen Radikal, einer aromatischen Tetrakarboxyl-Dianhydridstruktur, einer Funktionsgruppe, die Oligomerverbindungen mit den mit den R₁- oder R₂-Strukturen innerhalb des vernetzten Polyimid-Copolymers bilden kann, und Kombinationen davon besteht.

3. Bauteil einer Gasturbine nach Anspruch 1, wobei M eine Diamingruppen-, eine Dianhydridgruppen- und eine Endgruppenstruktur aufweist.

4. Bauteil einer Gasturbine nach Anspruch 1, wobei die thermische Oxidationsstabilität des vernetzten Polyimid-Copolymers etwa 1,8 % ist.

5. Bauteil einer Gasturbine nach Anspruch 1, wobei die Glasübergangstemperatur des vernetzten Polyimid-Copolymers höher als 316 °C (600 °F) ist.

6. Bauteil einer Gasturbine nach Anspruch 5, wobei die Glasübergangstemperatur des vernetzten Polyimid-Copolymers angenähert 338 °C (640 °F) ist.

7. Bauteil einer Gasturbine nach Anspruch 1, wobei das Bauteil eine ringförmige Geometrie hat.

8. Bauteil einer Gasturbine nach Anspruch 1, wobei das Bauteil ein Nebenstromkanal ist.

## Revendications

1. Composant de moteur de turbine à gaz comprenant :
une matrice renforcée par des fibres, la matrice étant une matrice réticulée comprenant un groupe R₁ et un groupe choisi parmi un groupe R₂, un groupe M et les combinaisons de ceux-ci ;
dans lequel le groupe R₁ comprend la structure suivante : 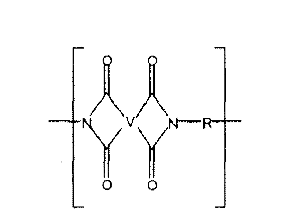 dans lequel le groupe R₂ comprend la structure suivante : 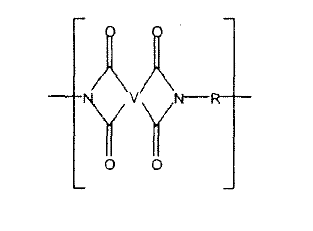 dans lequel V est une structure de liaison tétravalente, aromatique, substituée ou non substituée, monocyclique ou polycyclique ; R est un radical organique divalent substitué ou non substitué ;
la structure de R₂ étant différente de la structure de R₁ ;
dans lequel le groupe M est choisi dans le groupe constitué par une structure diamine, une structure dianhydride et une structure de groupe terminal ; et
la matrice réticulée ayant une température de transition vitreuse et une stabilité thermique à l'oxydation suffisantes pour fournir une stabilité de composant pour une température opératoire allant jusqu'à environ 288 °C (550 °F) où la température de transition vitreuse du copolymère de polyimide réticulé est d'environ 232 °C (450 °F) à environ 343 °C (650 °F) et la stabilité thermique à l'oxydation du copolymère de polyimide réticulé est inférieure à environ 2,0 %.

2. Composant de moteur de turbine à gaz selon la revendication 1, dans lequel R est choisi dans le groupe constitué par un radical organique divalent substitué ou non substitué, une structure dianhydride tétracarboxylique aromatique, un groupe fonctionnel pouvant former des composés oligomères avec les structures de R₁ ou de R₂ réticulées à l'intérieur du copolymère de polyimide réticulé, et les combinaisons de ceux-ci.

3. Composant de moteur de turbine à gaz selon la revendication 1, dans lequel M comprend un groupe diamine, un groupe dianhydride et une structure de groupe terminal.

4. Composant de moteur de turbine à gaz selon la revendication 1, dans lequel la stabilité thermique à l'oxydation du copolymère de polyimide réticulé est d'environ 1,8 %.

5. Composant de moteur de turbine à gaz selon la revendication 1, dans lequel la température de transition vitreuse du copolymère de polyimide réticulé est supérieure à 316 °C (600 °F).

6. Composant de moteur de turbine à gaz selon la revendication 5, dans lequel la température de transition vitreuse du copolymère de polyimide réticulé est d'environ 338 °C (640 °F).

7. Composant de moteur de turbine à gaz selon la revendication 1, dans lequel le composant a une géométrie annulaire.

8. Composant de moteur de turbine à gaz selon la revendication 1, dans lequel le composant est une conduite de dérivation.
